(19) Europäisches Patentamt
European Patent Office
Office européen des brevets

(11) EP 1 058 706 B1

(12) EUROPÄISCHE PATENTSCHRIFT

(45) Veröffentlichungstag und Bekanntmachung des Hinweises auf die Patenterteilung:
29.09.2004 Patentblatt 2004/40

(21) Anmeldenummer: 99907602.9

(22) Anmeldetag: 05.03.1999

(51) Int Cl.⁷: C08G 75/02

(86) Internationale Anmeldenummer:
PCT/EP1999/001445

(87) Internationale Veröffentlichungsnummer:
WO 1999/045057 (10.09.1999 Gazette 1999/36)

(54) **VERFAHREN ZUR HERSTELLUNG VON SCHWEFELHALTIGEN POLYMEREN**

METHOD FOR PRODUCING SULFUR-CONTAINING POLYMERS

PROCEDE DE PRODUCTION DE POLYMERES CONTENANT DU SOUFRE

(84) Benannte Vertragsstaaten:
DE FR GB NL

(30) Priorität: 05.03.1998 DE 19809254
10.07.1998 DE 19830916

(43) Veröffentlichungstag der Anmeldung:
13.12.2000 Patentblatt 2000/50

(73) Patentinhaber: Ticona GmbH
65451 Kelsterbach (DE)

(72) Erfinder:
• HAUBS, Michael
  D-55545 Bad Kreuznach (DE)
• WAGENER, Reinhard
  D-65439 Flörsheim (DE)
• LEHRL, Markus
  D-64546 Mörfelden-Walldorf (DE)

(56) Entgegenhaltungen:
EP-A- 0 353 716      EP-A- 0 373 364
EP-A- 0 374 462      EP-A- 0 405 609
EP-A- 0 737 705      EP-A- 0 798 330
WO-A-97/47676        US-A- 4 056 515

**Beschreibung**

Die Erfindung betrifft ein Verfahren zur Herstellung von linearen oder verzweigten schwefelhaltigen Polymeren wie Polyarylensulfiden, insbesondere von Polyphenylensulfid (PPS).

Die Herstellung von Polyarylensulfiden und die Eigenschaften dieser Polymere sind dem Fachmann an sich bekannt. Als Monomere werden dihalogenierte, aromatische Kohlenwasserstoffe, insbesondere Dichlorbenzol (DCB), und Sulfide, insbesondere Natriumsulfid eingesetzt. Die Monomeren werden in einem hochsiedenden, polar aprotischen Lösungsmittel, wie N-Methylpyrrolidon (NMP), zur Reaktion gebracht. Anschließend wird das Polymere isoliert.

Typischerweise wird zunächst wasserhaltiges Sulfid mit dem polarem aprotischen Lösungsmittel zur Reaktion gebracht und die Mischung weitgehend durch Destillation entwässert, wobei Lösungsmittelverluste und auch Verluste an Schwefelwasserstoff auftreten.

Diese Verfahren haben jedoch gravierende Nachteile in der Raum-Zeit-Ausbeute. Die Entwässerung ist häufig langwierig, weil man die Schaumbildung unterdrücken muß und die Verluste des aprotisch polaren Lösungsmittels minimieren will. Insgesamt resultieren bei den bekannten Verfahren Zykluszeiten von 10 Stunden oder noch länger, selbst bei Anwendung von Reaktionstemperaturen von bis zu 280 °C. Außerdem ist man bei der Monomerkonzentration beschränkt, weil das im Lösungsmittel mit seiner vollen Startkonzentration vorgelegte Sulfid oder Sulfidhydrat bei Zugabe des dihalogenierten aromatischen Kohlenwasserstoffs leicht ausfällt.

Es sind auch Verfahren bekannt, bei denen wasserhaltiges Sulfid der Reaktionsmischung zugegeben und das mit dem Sulfid eingetragene Wasser während der Reaktion abdestilliert wird. Dabei kommt es leicht zur Ausfällung von $Na_2S$, das der Reaktion entzogen wird.

EP-A-0 737 705 beschreibt ein zweistufiges Verfahren zur Herstellung von Polyarylensulfiden. Dort wird in der ersten Reaktionsstufe ein Überschuß des dihalogenierten, aromatischen Kohlenstoffs eingesetzt und das resultierende Präpolymer, welches Halogen-Endgruppen trägt, mit kleinen Mengen Sulfid in der zweiten Stufe umgesetzt. Die Aufgabe kurzer Reaktionszeiten ist in dieser Anmeldung befriedigend gelöst. Die Entwässerung wird aber dort absatzweise gemäß dem Stand der Technik mit seinen geschilderten Nachteilen geführt.

EP-A-0 374 462 beschreibt ein Verfahren zur Herstellung von Polyarylensulfiden aus dihalogenierten aromatischen Kohlenwasserstoffen und Sulfiden. Bei dem Verfahren wird der dihalogenierte, aromatische Kohlenwasserstoff zusammen mit dem polaren Lösungsmittel vorgelegt. Sulfid wird partiell kontinuierlich ohne vorherige Entwässerung zudosiert. Als Sulfidquelle wird ein Gemisch aus 66,6 mol-% Natriumsulfid und 33,4 mol-% Natriumhydrogensulfid mit 5 mol Hydratwasser je Sulfidäquivalent eingesetzt. Es wird ein stöchiometrischer Überschuß von 20 mol-% Hydrogensulfid gegenüber dem vorgelegten Dihalogenaromaten zudosiert, der in Form von $H_2S$ zusammen mit dem Hydratwasser während der Dosierungsphase entweicht. Es wird ein Verfahren offenbart, welches zwar die Nachteile der absatzweisen Entwässerung von Gemischen aus Lösungsmittel und Sulfid vermeidet, dafür aber Lösungsmittel- und erhebliche Monomerverluste aufweist. Auch die Raum-Zeit-Ausbeute ist mit einer Zykluszeit von 12 Stunden für die einstufige Reaktion unbefriedigend.

Die EP-A-0 215 259 beschreibt ein Verfahren zur Herstellung von Polyarylensulfiden aus Dihalogenaromaten und Alkalisulfid in N-Methylcaprolactam. Die eine Hälfte der Reaktionsmischung wird unter leichtem Rückfluß vorgelegt. Anschließend wird die zweite Hälfte der Mischung zudosiert. Als Sulfid wird ein Gemisch aus wasserfreiem Natriumsulfid und wasserfreiem Natriumhydrogensulfid eingesetzt. Der eigentlichen Polymerisationsreaktion ist eine Entwässerung vorangegangen. Die mittlere Reaktionszeit in der Rührkesselkaskade beträgt 12,5 Stunden. Auch bei diesem Verfahren entweicht Schwefelwasserstoff und muß entsorgt werden.

Die WO-A-97/47676 beschreibt ein Verfahren zur Herstellung von schwefelhaltigen Polymeren, insbesondere Polyarylensulfiden, aus einem Sulfid und einer aromatischen Dihalogenverbindung in einem Lösungsmittel, wobei eine Mischung aus aromatischer Dihalogenverbindung und Sulfid polymerisiert wird, zu der polymerisierten Mischung aromatische Dihalogenverbindung und Sulfid zugegeben werden und die Reaktionsmischung weiter polymerisiert wird. Das Verfahren erfordert einen zusätzlichen Polymerisationschritt vor der weiteren Zugabe der Monomeren. Das bedeutet eine Erhöhung der Zykluszeiten.

Vor dem genannten Stand der Technik lag der Erfindung die Aufgabe zugrunde, ein verbessertes Verfahren zur Herstellung schwefelhaltiger Polymere, insbesondere Polyarylensulfide, über einen weiten Molmassenbereich (z. B. $M_w$ = 10000 bis 200000 g/mol) bereitzustellen, das Nachteile der absatzweisen Entwässerung von Mischungen aus dipolar aprotischem Lösungsmittel und Sulfid vermeidet bzw. bei der Herstellung von Polyarylensulfiden die Beschränkung der Monomerkonzentration überwindet.

Es wurde nun überraschend gefunden, daß die Herstellung von schwefelhaltigen Polymeren, insbesondere Polyarylensulfiden, mit hoher Raum-Zeit-Ausbeute bei Reaktionstemperaturen von nicht mehr als 250° C und kurzen Reaktionszeiten (weniger als 5 Stunden) durchgeführt werden kann, und zwar ohne eine absatzweise Entwässerung eines Gemisches aus Sulfid und dipolar aprotischem Lösungsmittel. Erfindungsgemäß wird das Sulfid kontinuierlich oder partiell kontinuierlich dem Polymerisationsreaktor zugeführt, jedoch nicht als Salzschmelze oder wäßrige Lösung, sondern in Form seiner Lösung im dipolar aprotischen Lösungsmittel.

Es wurde auch gefunden, daß der Verlust von Schwefelwasserstoff während der Reaktion weitgehend unterdrückt und der Verlust von Lösungsmittel vermindert werden kann, wenn die Lösung aus Sulfid und dipolar aprotischem Lösungsmittel mit dem aus dem Polymerisationsreaktor entweichenden Dampfgemisch in Kontakt gebracht wird, bevor die Lösung aus Sulfid und dipolar aprotischem Lösungsmittel in den Polymerisationsreaktor gegeben wird.

Das erfindungsgemäße Verfahren stellt eine deutliche ökonomische und ökologische Verbesserung des Herstellungsverfahrens für schwefelhaltige Polymere, insbesondere Polyarylensulfide, über einen weiten Molmassenbereich, von 10000 bis 200000 g/mol dar. Der Verlust von Monomeren und Lösungsmittel aus dem Reaktionssystem wird während der Reaktion vermieden oder minimiert.

Gegenstand der Erfindung ist somit ein Verfahren zur Herstellung von schwefelhaltigen Polymeren aus mindestens einem Sulfid und mindestens einer aromatischen Dihalogenverbindung in mindestens einem dipolar aprotischen Lösungsmittel, wobei

a) in einem ersten Reaktionsgefäß eine Lösung aus einem Sulfid und einem dipolar aprotischen Lösungsmittel hergestellt wird,

b) in einem zweiten Reaktionsgefäß das Sulfid und eine aromatische Dihalogenverbindung unter Bildung eines schwefelhaltigen Polymers reagieren, und

c) das zweite Reaktionsgefäß während der Reaktion ganz oder teilweise Druckentspannt und das entweichende Dampfgemisch mit der in Schritt (a) hergestellten Lösung in Kontakt gebracht wird.

Die in Schritt (a) hergestellte Lösung kann gleichzeitig mit der aromatischen Dihalogenverbindung und gegebenenfalls weiterem Lösungsmittel kontinuierlich oder partiell kontinuierlich in das zweite Reaktionsgefäß dosiert werden.

In einer bevorzugten Ausführungsform der Erfindung wird ein stöchiometrischer Überschuß von 3 mol-% bis 100 mol-% bevorzugt 5 mol-% bis 75 mol-% und besonders bevorzugt 10 mol-% bis 50 mol-% des dihalogenierten aromatischen Kohlenwasserstoffs bezogen auf die stöchiometrische Sulfidmenge in das zweite Reaktionsgefäß dosiert. Dadurch wird ein halogenterminiertes Präpolymer erhalten. Dieses Präpolymer wird abgetrennt und in einer zweiten Stufe mit einer kleinen Menge Sulfid zum hochmolekularen Polymer umgesetzt.

Eine weitere Ausführungsform der vorliegenden Erfindung ist ein Verfahren zur Herstellung eines schwefelhaltigen hochmolekularen Polymers aus mindestens einem halogenterminierten Präpolymer, hergestellt gemäß den Schritten (a) bis (c) und einer kleinen Menge Sulfid, wobei

d) weniger als 10 mol-% Sulfid, bezogen auf die in den Schritten (a) bis (c) eingesetzten Menge Sulfids, zu Lösungsmittel und Präpolymer zugegeben werden,

e) Präpolymer und Sulfid zum schwefelhaltigen Polymer polymerisiert werden und

f) das schwefelhaltige Polymer isoliert wird.

Schwefelhaltige Polymere sind Polymere, die Arylensulfid-Einheiten enthalten. Die Arylen-Bestandteile enthalten ein- oder mehrkernige Aromaten oder verbundene Aromaten. Die Aromaten können auch Heteroatome enthalten. Solche Aromaten, die substituiert oder unsubstituiert sein können, sind beispielsweise Benzol, Pyridin, Biphenyl, Naphthalin, Phenanthren. Substituenten sind zum Beispiel $C_1$-$C_6$-Alkyl-, $C_1$-$C_6$-Alkoxy-, Carboxyl -, Amino - und Sulfonsäure - Gruppen. Verbundene Aromaten sind zum Beispiel Biphenyl oder durch Etherbrücken verbundene Aromaten, wie Arylenether.

Bevorzugte schwefelhaltige Polymere sind Polyarylensulfide, insbesondere Polyphenylensulfid.

Als Sulfid für die Herstellung der Polymeren eignen sich anorganische und organische Sulfide. Anorganische Sulfide sind Sulfide der Alkali- und Erdalkali-Metalle, wie Lithiumsulfid, Kaliumsulfid, Calciumsulfid und bevorzugt Natriumsulfid. Die anorganischen Sulfide können auch in situ aus entsprechenden Hydrogensulfiden oder Schwefelwasserstoff hergestellt werden, beispielsweise durch Reaktion mit Alkalihydroxiden.

Als organische Sulfide eignen sich salzartige Sulfide mit organischen Kationen. Organische Sulfide im Sinne der Erfindung sind auch solche organischen Schwefelverbindungen, die unter den Reaktionsbedingungen Sulfid- oder Hydrogensulfidanionen freisetzen, wie Thioacetamid oder Thio-N-Methylpyrrolidon.

Die Sulfide und gegebenenfalls Alkalihydroxide können wasserfrei, mit Kristallwasser in Form ihrer kristallinen Salzhydrate oder in Form ihrer gegebenenfalls temperierten wäßrigen Lösungen eingesetzt werden.

Als aromatische Dihalogenverbindungen eignen sich dihalogenierte aromatische Kohlenwasserstoffe, unter anderem Dihalogenbenzole wie o-, m- und p-Dichlorbenzol, substituierte Dihalogenbenzole wie 2,5-Dichlortoluol, 3,5-Dichlorbenzoesäure, 2,5-Dichlorbenzolsulfonsäure oder 3,5-Dichlorbenzolsulfonsäure oder deren Salze. Aber auch Dihalogennaphthaline wie 1,4-Dibromnaphthalin oder Dihalogendiphenyläther wie 4,4'-Dichlordiphenyläther können eingesetzt werden. Ebenso können Gemische von verschiedenen Dihalogenverbindungen eingesetzt werden. Es können auch kleine Mengen von 0,2 bis 5 Mol-%, bezogen auf Dihalogenaromat, polyhalogenierte aromatische Kohlenwasserstoffe eingesetzt werden, um zu verzweigten oder vernetzten schwefelhaltigen Polymeren zu gelangen.

Dihalogenaromaten und Sulfid werden auch als Monomere bezeichnet.

Als Lösungsmittel für die Herstellung des Polymers eignen sich dipolar aprotische Lösungsmittel vom Amidtyp, wie Dimethylformamid (DMF), Dimethylacetamid (DMAc), N-Methylcaprolactam oder N-alkylierte Pyrrolidone wie N-Methylpyrrolidon (NMP) oder Mischungen davon. Besonders bevorzugt ist NMP.

Unter dem Begriff Präpolymer sind Oligomere oder Polymere zusammengefaßt, die Arylensulfid-Einheiten enthalten. Diese Produkte haben gewöhnlich eine Molmasse, ausgedrückt als Zahlenmittel der Molmasse $M_n$, im Bereich von 500 bis 20000 g/mol. Sie können linear oder verzweigt sein. Es ist auch möglich durch Einsatz substituierter Dihalogenarylverbindungen, wie 2,5-Dichlortoluol, substituierte Präpolymere herzustellen. Bevorzugt werden Präpolymere mit Halogen-Endgruppen (halogenterminierte Präpolymere), insbesondere Chlor-Endgruppen, hergestellt.

Das Verfahren gemäß der Erfindung wird im folgenden am Beispiel der Herstellung von Polyphenylensulfid (PPS) aus Natriumsulfid und p-Dichlorbenzol beschrieben, ohne jedoch darauf beschränkt zu sein.

Natriumsulfid wird in Form eines seiner Hydrate, beispielsweise des Trihydrats, mit NMP gemischt. Zur Herstellung der Lösung von Sulfid und dem organischen Lösungsmittel in einem ersten Reaktionsgefäß beträgt das molare Verhältnis von Sulfid zu NMP im Bereich von S/NMP = 4 bis S/NMP = 0,2, bevorzugt von S/NMP = 2 bis S/NMP = 0,5.

Natriumsulfidhydrat kann auch in situ aus Natriumhydrogensulfid und Natriumhydroxid in Form der konzentrierten wäßrigen Lösung oder Salzhydrat hergestellt werden. Zur Einstellung eines bevorzugten pH-Bereichs ist es möglich, nicht stöchiometrische Mengen von NaSH und NaOH einzusetzen oder eine dieser beiden Komponenten dem Natriumsulfid zuzugeben. Für den Kontakt des aus dem zweiten Reaktionsgefäß entweichenden Dampfgemisches mit der Mischung aus Lösungsmittel und Sulfid kann ein Überschuß von 0,1 mol-% bis 25 mol-% NaOH verwendet werden.

Die zunächst zweiphasige Mischung aus Sulfid und NMP wird unter Inertgas in einem ersten Reaktionsgefäß auf etwa 85 °C bis 220 °C, bevorzugt 130 °C bis 210 °C erwärmt, wobei sich in einer schwach exothermen Reaktion eine homogene Lösung bildet. Das Reaktionsgefäß besteht im einfachsten Fall aus rostfreiem Stahl, bessere Korrosionsbeständigkeit zeigen Nickel-Basis-Legierungen oder Titan. Die Herstellung der homogenen Lösung aus Sulfid und dem Lösungsmittel kann absatzweise oder auch kontinuierlich geschehen.

Die Lösung aus NMP und Sulfid wird aus dem ersten Reaktionsgefäß zunächst ganz oder im Teilstrom mit dem aus dem zweiten Reaktionsgefäß entweichenden Dampf in Kontakt gebracht. Hierfür eignen sich verschiedene Wäscher, die auch die Form einer Kolonne haben können. Es ist zweckmäßig, die Dampf-Flüssig-Kontaktfläche im Wäscher durch Einbau von geeigneten Böden, Füllkörpern oder Packungen zu erhöhen. Für den Wäscher und seine Einbauten eignen sich die gleichen Werkstoffe wie für das erste Reaktionsgefäß. Wegen der großen spezifischen Oberfläche der Einbauten haben sich besonders korrosionsbeständige Werkstoffe, beispielsweise Titan, bewährt. Die Lösung aus NMP und Sulfid wird aus dem Sumpf des Wäschers direkt unter Schwerkraft oder, je nach Betriebsdruck des Wäschers und des zweiten Reaktionsgefäßes, mittels einer Pumpe in das zweite Reaktionsgefäß gegeben.

In einem gegebenenfalls beheizten Vorlagegefäß wird p-Dichlorbenzol (DCB) als Schmelze oder als Lösung in NMP vorgelegt. Für die Herstellung chlorterminierter Präpolymere wird ein stöchiometrischer Überschuß von 3 mol-% bis 100 mol-%, bevorzugt 5 mol-% bis 75 mol-% und besonders bevorzugt 10 mol-% bis 50 mol-% des DCB bezogen auf Sulfid eingesetzt.

Die Reaktanden werden nun in den festgelegten Mengenverhältnissen in das zweite Reaktionsgefäß dosiert, welches die Reaktionstemperatur aufweist. Die Reaktionstemperatur beträgt im allgemeinen von 180 °C bis 250 °C, bevorzugt von 215 °C bis 240 °C. Bei einer partiell kontinuierlichen Reaktionsführung ist es zweckmäßig, einen Teil des NMP temperiert in dem zweiten Reaktionsgefäß vorzulegen. Bei voll kontinuierlicher Reaktionsführung befindet sich eine stationäre Menge der reagierenden Mischung in dem zweiten Reaktionsgefäß. Weiteres NMP kann dem zweiten Reaktionsgefäß aus einem Vorlagegefäß oder in Form der Lösungen der beiden Monomere zugeführt werden. Das molare Verhältnis von eingesetzten NMP zum eingesetzten Sulfid beträgt 10 bis 1, bevorzugt 4 bis 1 und besonders bevorzugt 3,5 bis 1. Eingesetztes NMP bedeutet die Gesamtmenge aus Vorlage im zweiten Reaktionsgefäß und Lösungsmittel für die Monomeren.

Die Bildung des Polyphenylensulfids erfolgt unter diesen Bedingungen gleichzeitig mit der Zugabe der Monomere. Während der Reaktion wird kontinuierlich das Hydratwasser des Sulfids dampfförmig aus dem Reaktor entfernt. Der Druck im zweiten Reaktionsgefäß wird über ein Druckhalteventil geregelt. Je nach Wassergehalt des eingesetzten Sulfids, Einsatzkonzentration der Monomere, Reaktionstemperatur und Siedepunkt des polaren Lösungsmittels beträgt der Arbeitsdruck von 1 bara bis 20 bara (bar absolut), bevorzugt 2 bara bis 10 bara und besonders bevorzugt bei 3 bara bis 7 bara. Zusammen mit dem Wasserdampf entweicht je nach Druck, Temperatur und Basizität der Lösung auch ein Teil der Monomere in Form von dampfförmigem DCB und Schwefelwasserstoffgas zusammen mit etwas Lösungsmittel.

Das entweichende Dampfgemisch wird nach einer bevorzugten Ausführungsform im Wäscher mit der dem zweiten Reaktionsgefäß zuzuführenden Lösung aus NMP und Sulfid in Kontakt gebracht. In einer bevorzugten Ausführungsform der Erfindung geschieht dies im Gegenstrom, beispielsweise indem die Waschlösung unter Schwerkraft dem aufsteigenden Dampf entgegen rieselt. Der Betriebsdruck des Wäschers ist prinzipiell nicht beschränkt. Er liegt zweckmäßigerweise zwischen dem Betriebsdruck des zweiten Reaktionsgefäßes und Normaldruck.

In einer bevorzugten Ausführungsform der Erfindung wird der Wäscher bei dem Betriebsdruck des zweiten Reaktionsgefäßes betrieben. Der Wäscher sitzt direkt dem zweiten Reaktionsgefäß auf, so daß die Lösung nach dem Passieren des Wäschers direkt unter Schwerkraft in das zweite Reaktionsgefäß abläuft. Das gewaschene Dampfgemisch wird am Kopf des Wäschers über das Druckhalteventil entspannt und anschließend kondensiert.

In einer weiteren bevorzugten Ausführungsform der Erfindung wird das Dampfgemisch aus dem zweiten Reaktionsgefäß über ein Druckhalteventil in den Wäscher entspannt und dieser bei einem Druck von 0,8 bara bis 1,5 bara betrieben. Die Lösung aus NMP und Sulfid wird nach dem Passieren des Wäschers aus dem Sumpf des Wäschers abgezogen und aktiv in das zweite Reaktionsgefäß gepumpt. Das gewaschene Dampfgemisch wird am Kopf des Wäschers, gegebenenfalls nach Passieren eines weiteren Druckhalteventils, bei Normaldruck kondensiert und ausgeschleust. Im Sumpf beträgt die Betriebstemperatur des Wäschers 150 °C bis 250 °C. Die Betriebstemperatur am Kopf des Wäschers wird vom Betriebsdruck und der Zusammensetzung des Dampfgemischs bestimmt. Sie beträgt von 90 °C bis 220 °C, bevorzugt von 95 °C bis 180 °C.

In einer bevorzugten Ausführungsform werden die aus dem Wäscher dampfförmig entweichenden Komponenten außer Wasser wieder dem Prozeß zugeführt. Nach Kondensation des entweichenden Dampfes, beispielsweise bei 50 °C bis 80 °C unter Normaldruck, entmischt das Kondensat unter typischen Reaktionsbedingungen in eine schwerere, DCB-reiche Phase und eine leichtere, wasserreiche Phase. Das Lösungsmittel ist verteilt in beiden Phasen. Die DCB-reiche Phase kann direkt zurück in die reagierende Mischung gepumpt werden oder nach Reinigung des DCB wieder eingesetzt werden.

Aus der wasserreichen Phase kann gegebenenfalls vorhandenes Lösungsmittel beispielsweise durch Destillation wieder gewonnen und eingesetzt werden. Es ist auch möglich, das Lösungsmittel direkt ohne Kondensation des Dampfgemischs aus dem Wäscher abzutrennen. Dazu kann das Dampfgemisch aus dem Wäscher beispielsweise einer Destillationskolonne zugeführt werden.

In einer besonders bevorzugten Ausführungsform können die Aufgaben des Wäschers und einer anschließenden Destillationskolonne auch in einem einzigen Apparat gelöst werden, indem der untere Teil einer Kolonne als Wäscher und der obere Teil derselben als Rektifikationskolonne betrieben wird. Dabei wird etwa in die Mitte der Kolonne das Sulfid-Lösungsmittelgemisch und auf den Kolonnenkopf eine Flüssigkeit, vorzugsweise Wasser aufgebracht. Im unteren Teil der Kolonne wird Schwefelwasserstoff absorbiert und bereits ein Teil des dampfförmigen Lösungsmittels kondensiert, wobei ein Teil des im Sulfid-Lösungsmittelgemisch enthaltenen Wassers verdampft. Im oberen Teil der Kolonne wird der restliche Lösungsmitteldampf praktisch vollständig kondensiert, wobei das auf den Kolonnenkopf aufgegebene Wasser ganz oder teilweise verdampft. Das die Kolonne verlassende Dampfgemisch besteht praktisch nur aus dampfförmigem Wasser und Dichlorbenzol.

Es ist vorteilhaft, auf den Kolonnenkopf anstelle von Wasser eine verdünnte Lauge oder Base aufzugeben, um letzte Reste an Schwefelwasserstoff zu absorbieren. Die Konzentration der Base beträgt von 0,01 mol/l bis 10 mol/l.

Liegt im ersten Reaktionsgefäß das molare Verhältnis von Sulfid zu NMP im Bereich S/NMP > 1, kann eine Reaktion des überschüssigen Sulfids mit $H_2S$ oder NMP in der Kolonne stattfinden. Auf diese Weise werden $H_2S$ und NMP dem Verdampfungsgleichgewicht durch Chemisorption entzogen und die Monomerverluste sowie Lösungsmittelverluste werden weiter minimiert. Eine weitere Reduzierung der Monomerverluste kann erreicht werden, wenn die im ersten Reaktionsgefäß hergestellte Mischung aus Sulfid und Lösungsmittel teilweise vorentwässert wird, bevor es in den Wäscher oder in das zweite Reaktionsgefäß eintritt.

Bei einer partiell kontinuierlichen Reaktionsführung beträgt die Dauer der Dosierungsphase von 15 Minuten bis 240 Minuten, bevorzugt von 30 Minuten bis 120 Minuten. Anschließend wird die Reaktionsmischung noch 30 bis 90 Minuten bei der Reaktionstemperatur gerührt. Die Zykluszeit der ersten Reaktionsstufe beträgt weniger als 5 Stunden, bevorzugt weniger als 3 Stunden. Die erste Reaktionsstufe umfaßt partiell kontinuierliche Zudosierung und Nachrührzeit. Für die Aufarbeitung kann es vorteilhaft sein, daß noch verbliebenes Reaktionswasser nach Abschluß der Reaktion ganz oder teilweise entfernt wird. Wahlweise kann vor der Aufarbeitung der Reaktorinhalt durch Zugabe von Säuren neutral oder schwach sauer eingestellt werden. Geeignete Säuren sind Essigsäure, Salzsäure oder Kohlendioxid.

Bei einer voll kontinuierlichen Reaktionsführung wird die Reaktionsmischung während der Reaktion aus dem zweiten Reaktionsgefäß ausgetragen, so daß der Füllstand im zweiten Reaktionsgefäß zeitlich stationär bleibt. Die Verweilzeit dieses kontinuierlichen Rührkesselreaktors beträgt von 10 Minuten bis 180 Minuten, bevorzugt von 30 Minuten bis 120 Minuten.

Die Präpolymere entstehen bei einem Reaktionsumsatz bezogen auf DCB von 10 mol-% bis 98 mol-%, bevorzugt von 30 mol-% bis 95 mol-%, besonders bevorzugt von 50 mol-% bis 90 mol-%. Die mittlere Molmasse der Präpolymeren, ausgedrückt durch das Gewichtsmittel Mw, beträgt von 1.000 g/mol bis 30.000 g/mol, bevorzugt von 2.000 g/mol bis 20.000 g/mol und besonders bevorzugt von 3.000 g/mol bis 15.000 g/mol.

Das Präpolymer liegt gelöst neben dem weitgehend kristallinen Salzniederschlag in der Reaktionsmischung vor und wird durch geeignete Methoden abgetrennt. Das Präpolymer kann durch Abkühlen ausgefällt und gemeinsam mit dem Salz abfiltriert werden. Der Filtrationsrückstand wird zweckmäßigerweise mit Lösungsmittel gewaschen, um anhaftende Mutterlaugenreste zu entfernen. Als Resultat dieser Trennoperation wird Polymer und Salz als Feststoff und die Mutterlauge erhalten. Die Mutterlauge kann direkt zur Herstellung von weiterem Polymer wiederverwendet werden. Das Präpolymer wird aus dem Feststoff, der auch vorher getrocknet werden kann, durch Aufkochen mit Wasser und anschließende Filtration gewonnen.

Es ist auch möglich, die entstandene Suspension in einer Entspannungsverdampfung oder Sprühtrocknung aufzuarbeiten. Dabei werden Lösungsmittel und weitere niedermolekulare Substanzen als Hauptbestandteile dampfförmig abgezogen. Polymer und Salz fallen als weitgehend trockener Feststoff an. Nach einer Wasserwäsche und Trocknung wird das feste Präpolymer erhalten.

Eine weitere Möglichkeit ist die Abtrennung des Salzes durch Druckfiltration bei einer Temperatur, bei der das Präpolymer in der Reaktionsmischung flüssig oder gelöst vorliegt. Im allgemeinen betragen diese Temperaturen von 100 °C bis 300 °C, bevorzugt von 180 °C bis 280 °C. Anstelle der Druckfiltration können aber auch andere Verfahren zur Abtrennung von Feststoffen aus Flüssigkeiten eingesetzt werden, wie Zentrifugieren oder Dekantieren. Dabei bleibt nur das Salz zurück und das Präpolymer findet sich gelöst im Filtrat wieder. Daraus kann das Präpolymer entweder durch Sprühtrocknung oder durch Kristallisation und anschließende Filtration isoliert werden. Es ist auch möglich, das Präpolymer direkt in die folgenden Reaktionsschritte (d) und (e) zu überführen.

Das halogenterminierte Präpolymer wird nach Zugabe von höchstens 10 mol% Sulfid (d), bezogen auf die in Schritten (a) bis (c) eingesetzte Sulfidmenge, in Schritt (e) weiter polymerisiert. In einer bevorzugten Ausführungsform der Erfindung beträgt das Massenverhältnis von Lösungsmittel zum eingesetzten Präpolymer in Schritt (e) weniger als 5, bevorzugt von 1 bis 2,5.

Die Reaktionsbedingungen für die weitere Polymerisation in Schritt (e) können in weiten Grenzen variiert werden. So können die Reaktionstemperaturen von 180 °C bis 290 °C, bevorzugt von 230 °C bis 270 °C betragen. In einer besonders bevorzugten Ausführungsform der Erfindung beträgt die Reaktionstemperatur < 250 °C. Die Reaktionszeiten können von 20 Minuten bis 180 Minuten, bevorzugt von 30 Minuten bis 120 Minuten betragen. Für die Fortsetzung der Polymerisation in Schritt (e) können wahlweise zusätzlich Maßnahmen getroffen werden, die zur Erzielung möglichst hoher Molmassen führen. Dazu zählt der Zusatz von Promotoren. Solche Promotoren sind Alkali- und Erdalkalisalze niederer Carbonsäuren, insbesondere Natriumacetat. Es ist ebenfalls möglich, in Schritt (e) definierte Mengen Wasser oder andere Nichtlösungsmittel für das Polymere zuzusetzen, um die weitere Polymerisation in einem zweiphasigen Reaktionssystem zu führen. Schließlich können weitere Zusatzstoffe, wie Essigsäure oder Schwefelwasserstoff oder Kohlendioxid zugesetzt werden, um die Basenstärke des Systems einzustellen.

In einer bevorzugten Ausführungsform der Erfindung liegt das Polymer in Schritt (e) homogen gelöst im Lösungsmittel vor. Die Reaktionsmischung ist dann eine klare und viskose Lösung. Sie enthält als ungelöste Feststoffe höchstens 5 Gew.-% Salz, bevorzugt weniger als 2 Gew.-% Salz, bezogen auf die Gesamtmasse der Reaktionsmischung in Schritt (e). Polymerisieren des Präpolymers und des Sulfids zu dem schwefelhaltigen Polymer in Schritt (e) geschieht in praktisch homogener Lösung.

In einer bevorzugten Ausführungsform der Erfindung beträgt die gesamte Reaktionszeit nicht mehr als 5 Stunden bei Reaktionstemperaturen von höchstens 250 °C.

Alle Phasen der Polymerherstellung können entweder absatzweise oder kontinuierlich geführt werden. Beispielsweise kann die kontinuierliche Reaktionsführung mittels einer Rührkesselkaskade, in einem Strömungsrohr oder einer Kombination beider Vorrichtungen verwirklicht werden.

Die Abtrennung des Polymers in Schritt (f) erfolgt beispielsweise durch Kristallisation oder Druckfiltration. Andere Verfahren zur Abtrennung von Feststoffen aus Flüssigkeiten können auch eingesetzt werden, wie Zentrifugieren oder Dekantieren. Es ist auch möglich, die entstandene Suspension in einer Entspannungsverdampfung oder Sprühtrocknung aufzuarbeiten. Dabei werden Lösungsmittel und weitere niedermolekulare Substanzen als Hauptbestandteile dampfförmig abgezogen. Polymer und Nebenprodukt Salz fallen als weitgehend trockenes Feststoffgemisch an. Vor den genannten Aufarbeitungsschritten kann zunächst eine Klärfiltration bei oder nahe der Reaktionstemperatur, bei der das Polymer homogen gelöst vorliegt, durchgeführt werden, um Restsalzmengen auszutragen.

Die Schmelzpunkte der Polyphenylensulfide betragen von 270 °C bis 305 °C, üblich sind von 280 °C bis 295 °C. Die Schmelzviskosität beträgt von 5000 bis 500000 mPas (centiPoise), bevorzugt von 50000 bis 250000 mPas (centiPoise). Die Schmelzviskosität ist ohne Zusätze stabil. Sie verändert sich bei 300 °C über einen Zeitraum von 1 Stunde um weniger als 10 %.

Die nach dem Verfahren gemäß der Erfindung hergestellten schwefelhaltigen Polymere, wie Polyarylensulfide, insbesondere Polyphenylensulfid, zeichnen sich durch eine hohe Reinheit und hohe Qualität aus. Besonders bemerkenswert ist die Eigenschaft, daß die Polymere praktisch keinen Geruch und keine Verfärbung aufweisen. Auch weisen die Polymere ein günstiges Verhalten bei thermischer Belastung auf.

Die vorliegende Erfindung betrifft auch schwefelhaltige Polymere, wie Polyarylensulfide, erhältlich nach dem Verfahren gemäß der Erfindung.

Die gemäß der Erfindung hergestellten schwefelhaltigen Polymere lassen sich durch Schmelzextrusion zu Formkörpern verarbeiten. Aber auch Folien und Fasern mit guten mechanischen Eigenschaften lassen sich herstellen.
Das neue Verfahren hat eine Reihe von Vorteilen:

- Es wird eine eingesetzte Lösungsmittelmenge von unter 350 g Lösungsmittel pro Mol eingesetztes Sulfid und damit eine gute Raum-Zeit-Ausbeute erreicht.
- Die Gesamt-Reaktionszeit beträgt weniger als 5 Stunden.
- Die Reaktionstemperatur beträgt < 250 °C oder sogar wesentlich weniger, wodurch Nebenreaktionen, die zu toxischen Verunreinigungen des Polymers führen können, zurückgedrängt werden.
- Das Polymer wird in einer Ausbeute von mindestens 90 %, üblicherweise 95 %, bezogen auf die eingesetzte Sulfidmenge in der Gesamtreaktion, erhalten.
- Die Verluste an Schwefelwasserstoff während der Zugabe der Monomere bei gleichzeitiger Verdampfung des Hydratwassers werden weitgehend unterdrückt. Technische Maßnahmen zur Abluftreinigung und Wiedergewinnung des Schwefelwasserstoffs außerhalb des eigentlichen Reaktionsapparates werden vereinfacht und reduziert.
- Die Verluste von Lösungsmittel während der Zugabe der Monomere bei gleichzeitiger Verdampfung des Hydratwassers werden minimiert. Dies verbilligt und reduziert den technischen Aufwand für die Lösungsmittelrückgewinnung außerhalb des eigentlichen Reaktionsapparates.

Die Erfindung wird anhand einer Zeichnung und Beispielen näher erläutert.

## Zeichnung

Die Zeichnungen 1 und 2 zeigen den Aufbau einer Anlage gemäß bevorzugten Ausführungsformen des erfindungsgemäßen Verfahrens.
Zeichnung 1 zeigt eine Anlage, die ein Vorlagegefäß (1), erstes Reaktionsgefäß (2), zweites Reaktionsgefäß (3), Wäscher (4) und Kondensator (5) enthält.
Zeichnung 2 zeigt eine Anlage, die ein Vorlagegefäß (1), erstes Reaktionsgefäß (2), zweites Reaktionsgefäß (3), Wäscher in Verbindung mit Destillationskolonne (4'), Kondensator (5) und Wasserzulauf (6) enthält, .

## Beispiele

Vergleichsbeispiel 1

In einem 100 l Rührkessel aus Edelstahl wurden 35 kg Natriumsulfid (61 %, 273 mol) und 2,25 kg Natriumhydrogensulfid (28 mol) und 25 kg NMP vorgelegt, mit Stickstoff inertisiert und unter Rühren aufgeheizt. Bei 150 °C bis 170 °C bildete sich eine homogene Lösung des Sulfids in NMP. In einem beheizten Vorlagegefäß wurden 48 kg DCB (327 mol) und 16 kg NMP vorgelegt. In einem 200 l Titan-Rührkesselreaktor wurden 45 kg NMP vorgelegt und unter Rühren auf 210 °C erwärmt. Bei dieser Temperatur wurde damit begonnen, die DCB/NMP-Lösung und die Lösung des Sulfids in NMP in den Reaktor zu pumpen.
Dabei wird der Reaktor weiter beheizt und erreicht eine Reaktionstemperatur von 230 °C. Über ein Druckhalteventil wurde der Druck im Reaktor auf 6 bara konstant gehalten. Das entweichende Dampfgemisch wurde kondensiert. Es entmischte in eine DCB-reiche Unterphase und eine wasserreiche Oberphase. Die schwere Phase wurde in den Titan-Reaktor zurückgepumpt. Die Zudosierung der Monomere war nach 1,5 Stunden beendet. Das molare Verhältnis von NMP zum eingesetzten Sulfid im zweiten Reaktionsgefäß betrug 3,22. Es wurde dann noch eine Stunde bei 230 °C bis 235 °C nachgerührt. Anschließend wurde die Reaktionsmischung abgekühlt, das Präpolymer ausgefällt und der Reaktor bei 80 °C auf eine Filternutsche entleert. Es wurde von der Mutterlauge, die NMP als Hauptbestandteil neben dem überschüssigen DCB enthielt, abfiltriert. Dann wurde bis zur Salzfreiheit mit Wasser gewaschen und getrocknet. Der Gewichtsanteil an organisch gebundenem Chlor im Präpolymer betrug 1,5 %. Die Ausbeute an Präpolymer betrug 30,0 kg (93 % der Theorie).

Beispiel 2

25 kg des Präpolymeren aus Vergleichsbeispiel 1 wurden mit 500 g Natriumsulfid-Trihydrat und 300 g Wasser in 60 kg NMP auf 250 °C erwärmt. Bei 235 °C bildete sich eine klare Lösung. Die Reaktionstemperatur wurde 90 Minuten bei 250 °C gehalten. Anschließend wurde die Lösung mit 25 kg NMP verdünnt, auf etwa 80 °C abgekühlt und das ausgefällte Polymer abfiltriert. Das Polymer wurde dreimal mit 50 Liter Wasser bei 85 °C gewaschen und dann getrocknet. Die Ausbeute betrug 24,5 kg (98 % der Theorie). Die Schmelzviskosität des Polymers betrug 52 Pas, gemessen bei 310 °C und 1000 $s^{-1}$. Sie änderte sich innerhalb einer Stunde um weniger als 10 %.

Beispiel 3

In einem 100 l Rührkessel aus Edelstahl wurden 40 kg Natriumsulfid (60 % bis 62 %, 307,7 mol) und 2,4 kg Natriumhydrogensulfid 70% (30 mol) und 40 kg NMP vorgelegt, mit Stickstoff inertisiert und unter Rühren aufgeheizt. Bei 150 °C bis 170 °C bildete sich eine homogene Lösung des Sulfids in NMP. In einem beheizten Vorlagegefäß wurden 60 kg DCB (408 mol) und 10 kg NMP vorgelegt. In einem 200 l Titan-Rührkesselreaktor wurden 50 kg NMP vorgelegt und unter Rühren auf 210 °C erwärmt. Bei dieser Temperatur wurde damit begonnen, die DCB/NMP-Lösung mit jeweils 40 kg/h in den Reaktor zu pumpen. Die Lösung aus Sulfid und NMP wurde aus dem ersten Edelstahl-Reaktionsgefäß von oben in eine Titan-Kolonne gepumpt.

Dabei wurde der Reaktor weiter beheizt und auf einer Reaktortemperatur von 234 °C gehalten. Über ein Druckhalteventil wurde der Druck im Reaktor auf 5,5 bara konstant gehalten. Das entweichende Dampfgemisch wurde kondensiert. Es entmischte in eine DCB-reiche Unterphase und eine wasserreiche Oberphase. Die schwere Phase wurde in den Titan-Reaktor zurückgepumpt. Das molare Verhältnis von NMP zum eingesetzten Sulfid betrug 2,7. Es wurde dann noch 1,5 Stunden bei 230 °C bis 235 °C nachgerührt. Anschließend wurde die Reaktionsmischung abgekühlt, das Präpolymer ausgefällt und der Reaktor bei 80 °C auf eine Filternutsche entleert. Es wurde von der Mutterlauge, die NMP als Hauptbestandteil neben dem überschüssigen DCB enthielt, abfiltriert. Dann wurde bis zur Salzfreiheit mit Wasser gewaschen und getrocknet. Der Gewichtsanteil an organisch gebundenem Chlor im Präpolymer betrug 1,5 %. Die Ausbeute an Präpolymer betrug 33,4 kg (92 % der Theorie).

Beispiel 4

In einem 100 l Rührkessel aus Edelstahl wurden 38,5 kg Natriumsulfid (61 %, 301 mol) und 25 kg NMP (253 mol) vorgelegt. Das Gemisch wurde mit Stickstoff inertisiert und unter Rühren aufgeheizt. Das molare Verhältnis von Sulfid zu NMP im ersten Reaktionsgefäß betrug 1,19 (S/NMP). Bei 150 °C bis 170 °C bildete sich eine homogene Lösung des Sulfids in NMP. In einem beheizten Vorlagegefäß wurden 48 kg DCB (327 mol) und 16 kg NMP vorgelegt. In einem 200 l Titan-Rührkesselreaktor wurden 55 kg NMP vorgelegt und unter Rühren auf 210 °C erwärmt. Bei dieser Temperatur wurde damit begonnen, die DCB/NMP-Lösung direkt über ein abgetauchtes Rohr in den Reaktor zu pumpen. Die Lösung aus Sulfid und NMP wurde aus dem ersten Edelstahl-Reaktionsgefäß von oben in eine Titan-Kolonne gepumpt. Die Titan-Kolonne war mit einer Packung aus Titan-Profilblechen versehen. Der Boden der Kolonne war offen und direkt an den Dom des Titanreaktors geflanscht. Über ein Druckhalteventil wurde der Druck im Reaktor und der Waschkolonne auf 4 bara konstant gehalten. Dabei wurde der Reaktor weiter beheizt und die Reaktortemperatur schließlich auf 234 °C konstant gehalten. Das entweichende Dampfgemisch wurde kondensiert. Es entmischte in eine DCB-reiche Unterphase und eine wasserreiche Oberphase. Die schwere Phase wurde in den Titan-Reaktor zurückgepumpt. Die leichte Oberphase des kondensierten Dampfgemischs wurde nach Abschluß des Versuchs gewogen und analysiert. Sie enthielt 12,2 kg Wasser und 6,2 kg NMP.

Die Zudosierung der Monomere war nach 1,5 Stunden beendet. Das molare Verhältnis von NMP zum eingesetzten Sulfid im zweiten Reaktionsgefäß betrug 3,22. Es wurde dann noch eine Stunde bei 234 °C nachgerührt. Anschließend wurde die Reaktionsmischung abgekühlt, das Präpolymer ausgefällt und der Reaktor bei 80 °C auf eine Filternutsche entleert. Es wurde von der Mutterlauge, die NMP als Hauptbestandteil neben dem überschüssigen DCB enthielt, abfiltriert. Dann wurde bis zur Salzfreiheit mit Wasser gewaschen und getrocknet. Der Gewichtsanteil an organisch gebundenem Chlor im Präpolymer betrug 1,4 %. Die Ausbeute an Präpolymer betrug 31,5 kg (97 % der Theorie).

Eine genau ausgewogene Menge des NMP-haltigen Mutterlaugenfiltrats wurde mit einer definierten Menge Wasser verdünnt und seine Hydroxid-Ionen-Konzentration durch Titration bestimmt. Die Hydroxid-Ionen-Konzentration des Mutterlaugenfiltrats war über das Hydrolysegleichgewicht des Natriumsulfids mit der während der Reaktion entwichenen Menge gasförmigen Schwefelwasserstoffs verknüpft:

$$Na_2S + 2H_2O \Leftrightarrow 2NaOH + H_2S$$

Die Auswertung der Titration ergab, daß 2,8 mol $H_2S$, entsprechend 0,9 % der vereinigten Sulfid- und Hydrogensulfid-Einsatzmenge, entwichen sind.

Die Ergebnisse von Vergleichs beispiele 1 und Beispiel 4 sind in der Tabelle dargestellt.

Tabelle

| PARAMETER | VERGLEICHSBEISPIEL 1 | BEISPIEL 4 |
|---|---|---|
| **Rührkessel (2)** | | |
| Natriumsulfid | 35 kg (61 %, 273 mol) | 38,5 kg (61 %, 301 mol) |
| Natriumhydrogensulfid | 2,25 kg (70 %, 28 mol) | -- |
| NMP | 25 kg (253 mol) | 25 kg (253 mol) |
| S/NMP | 1,19 | 1,19 |
| **Vorlagegefäß (1)** | | |
| DCB | 48 kg (327 mol) | 48 kg (327 mol) |
| NMP | 16 kg | 16 kg |
| **Titan-Rührkessel (3)** | | |
| NMP | 55 kg | 55 kg |
| **Einleitung in den Reaktor** | | |
| DCB/NMP-Lösung | in ein abgetauchtes Rohr | in ein abgetauchtes Rohr |
| Sulfid und NMP Lösung | in ein abgetauchtes Rohr | in eine Titan-Kolonne |
| Druck | 4 bara | 4 bara |
| S/NMP | 3,22 | 3,22 |
| Reaktionstemperatur | 234 °C | 234 °C |
| **Oberphase** | | |
| $H_2O$ | 12,1 kg | 12,2 kg |
| NMP | 12,8 kg | 6,2 kg |
| **Präpolymer** | | |
| Gebundenes Chlor | 1,5 % | 1,4 % |
| Ausbeute | 30,0 kg (92 % d. Th.) | 31,5 kg (97 % d. Th.) |
| **$H_2S$-Verluste** | 6,9 mol-% | 0,9 mol-% |

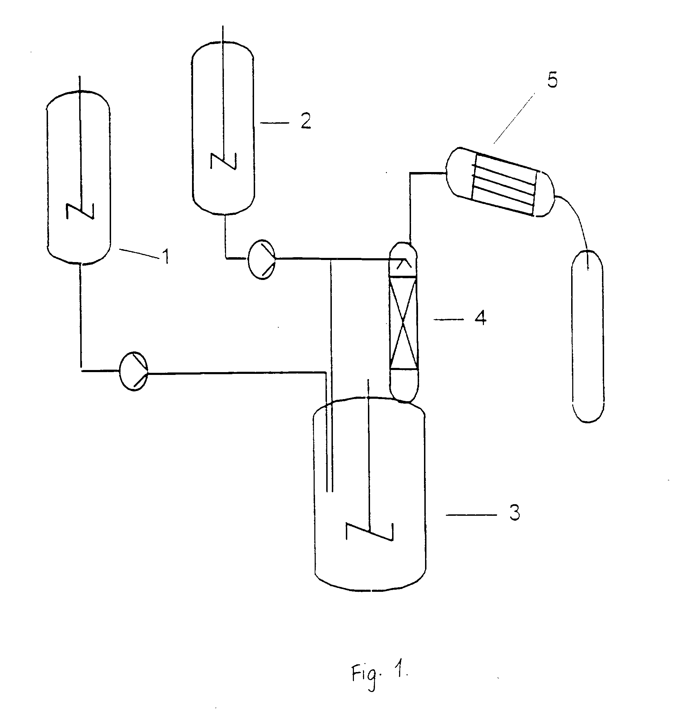

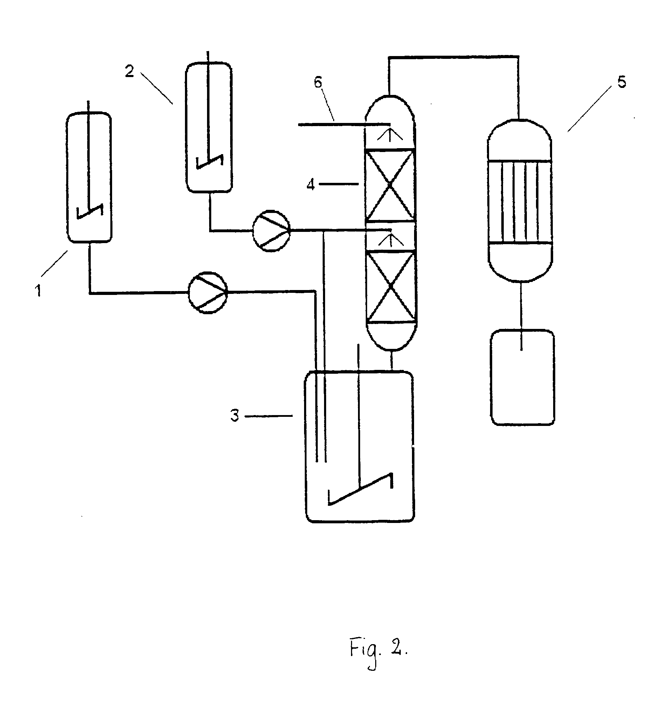

**Patentansprüche**

1. Verfahren zur Herstellung von schwefelhaltigen Polymeren aus mindestens einem Sulfid und mindestens einer aromatischen Dihalogenverbindung in mindestens einem Lösungsmittel, wobei

   a) in einem ersten Reaktionsgefäß (2) eine Lösung aus einem Sulfid und einem dipolar aprotischen Lösungsmittel hergestellt wird,
   b) in einem zweiten Reaktionsgefäß (3) das Sulfid und eine aromatische Dihalogenverbindung unter Bildung eines schwefelhaltigen Polymers reagieren,
   c) das zweite Reaktionsgefäß (3) während der Reaktion ganz oder teilweise Druck entspannt und das entweichende Dampfgemisch mit der in Schritt (a) hergestellten Lösung in Kontakt gebracht wird.

2. Verfahren nach Anspruch 1, wobei die aromatische Dihalogenverbindung in einem stöchiometrischen Überschuß von 3 mol-% bis 100 mol-%, bevorzugt 5 mol-% bis 75 mol-% und besonders bevorzugt 10 mol-% bis 50 mol-% des dihalogenierten aromatischen Kohlenwasserstoffs bezogen auf die stöchiometrische Sulfidmenge eingesetzt wird.

3. Verfahren nach Anspruch 1 oder 2, wobei während der Reaktion entweichende dihalogenierte aromatische Kohlenwasserstofe der Polymerisation wieder zugeführt werden.

4.  Verfahren nach einem oder mehreren der Ansprüche 1 bis 3, wobei die Lösung aus dem Sulfid und dem dipolar aprotischen Lösungsmittel bei einer Temperatur von 85 °C bis 220 °C, bevorzugt 130 °C bis 210 °C hergestellt wird.

5.  Verfahren nach einem oder mehreren der Ansprüche 1 bis 4, wobei in der Lösung aus dem Sulfid und dem dipolar aprotischen Lösungsmittel das molare Verhältnis von Sulfid zu Lösungsmittel im Bereich von Sulfid/NMP = 4 bis Sulfid/NMP = 0,2, bevorzugt bei Sulfid/NMP = 2 bis SulfidNMP = 0.5 liegt.

6.  Verfahren nach einem oder mehreren der Ansprüche 1 bis 5, wobei die in Schritt (a) hergestellte Lösung vor dem Eintritt in das zweite Reaktionsgefäß (3) in Schritt (c) in einem Wäscher unter Schwerkraft mit dem aufsteigenden Dampfgemisch in Kontakt gebracht wird.

7.  Verfahren nach Anspruch 6, wobei als Wäscher eine Kolonne eingesetzt wird.

8.  Verfahren nach Anspruch 6 oder 7, wobei als Wäscher der untere Teil einer Kolonne eingesetzt wird und im oberen Teil der Kolonne Lösungsmittel von Wasser getrennt wird.

9.  Verfahren nach einem oder mehreren der Ansprüche 1 bis 8, wobei das molare Verhältnis von Lösungsmittel zu eingesetztem Sulfid in Schritt (b) 4 bis 1, bevorzugt 3,5 bis 1, oder das Massenverhältnis von Lösungsmittel zu eingesetztem Sulfid in Schritt (b) 4 bis 1, bevorzugt 3,5 bis 1 beträgt.

10. Verfahren zur Herstellung eines schwefelhaltigen Polymers aus mindestens einem halogenierten Präpolymer und Sulfid, das nach einem oder mehreren der Ansprüche 1 bis 9 in einer ersten Stufe hergestellt wird, in dem ein stöchiometrischer Überschuß von 3 mol-% bis 100 mol-% einer aromatischen Halogenverbindung bezogen auf Sulfid eingesetzt wird und

    d) in einer zweiten Stufe weniger als 10 mol-% Sulfid, bezogen auf die in den Schritten (a) bis (c) eingesetzte Menge Sulfids, zu Lösungsmittel und Präpolymer zugegeben werden,
    e) Präpolymer und Sutfid in der zweiten Stufe zum schwefelhaltigen Polymer polymerisiert werden und
    f) das schwefelhaltige Polymer isoliert wird.

11. Verfahren nach Anspruch 10, wobei die Reaktion von Präpolymer und Sulfid zum schwefelhaltigen Polymer in Schritt (e) in nahezu homogener Lösung verläuft, die höchstens 5 Gew.-% Salz, bevorzugt weniger als 2 Gew.-% ungelöste Feststoffe, bezogen auf die Gesamtmasse der Reaktionsmischung in Schritt (e) aufweist.

**Claims**

1.  The process for preparing sulfur-containing polymers from at least one sulfide and from at least one aromatic dihalogen compound in at least one solvent, where

    a) a solution made from a sulfide and from a dipolar aprotic solvent is prepared in a first reaction vessel (2),
    b) the sulfide and an aromatic dihalogen compound react in a second reaction vessel (3) to form a sulfur-containing polymer,
    c) the pressure in the second reaction vessel (3) is to some extent or completely released during the reaction, and the emanating vapor mixture is brought into contact with the solution prepared in step (a).

2.  The process as claimed in claim 1, where the aromatic dihalogen compound is used in a stoichiometric excess of from 3 to 100 mol%, preferably from 5 to 75 mol% and particularly preferably from 10 to 50 mol% of the dihalogenated aromatic hydrocarbon, based on the stoichiometric amount of sulfide.

3.  The process as claimed in claim 1 or 2, where dihalogenated aromatic hydrocarbons emanating during the reaction are reintroduced to the polymerization.

4.  The process as claimed in one or more of claims 1 to 3, where the solution made from the sulfide and from the dipolar aprotic solvent is prepared at a temperature of from 85 to 220°C, preferably from 130 to 210°C.

5.  The process as claimed in one or more of claims 1 to 4, where the molar ratio of sulfide to solvent in the solution made from the sulfide and from the dipolar aprotic solvent is sulfide/NMP = from 4 to 0.2, preferably sulfide/NMP = from 2 to 0.5.

6. The process as claimed in one or more of claims 1 to 5, where prior to entry into the second reaction vessel (3) in step (c) the solution prepared in step (a) is brought into contact in a scrubber using gravity with the rising vapor mixture.

7. The process as claimed in claim 6, where a column is used as scrubber.

8. The process as claimed in claim 6 or 7, where the lower part of a column is used as scrubber and in the upper part of the column solvent is separated from water.

9. The process as claimed in one or more of claims 1 to 8, where the molar ratio of solvent to sulfide used in step (b) is from 4 to 1, preferably from 3.5 to 1, or the weight ratio of solvent to sulfide used in step (b) is from 4 to 1, preferably from 3.5 to 1.

10. A process for preparing a sulfur-containing polymer from at least one halogenated prepolymer and sulfide which is prepared as claimed in one or more of claims 1 to 9 in a first stage, in which process a stoichiometric excess from 3 to 100 mol% of an aromatic halogen compound is used, based on sulfide, and

   d) in a second stage less than 10 mol% of sulfide, based on the amount of sulfide used in steps (a) to (c), are added to solvent and prepolymer,
   e) prepolymer and sulfide are polymerized in the second stage to give the sulfur-containing polymer, and
   f) the sulfur-containing polymer is isolated.

11. The process as claimed in claim 10, where the reaction of prepolymer and sulfide to give the sulfur-containing polymer in step (e) proceeds in virtually homogeneous solution which comprises not more than 5% by weight of salt, and preferably less than 2% by weight of undissolved solids, based on the total weight of the reaction mixture in step (e).

**Revendications**

1. Procédé pour la préparation de polymères contenant du soufre à partir d'au moins un sulfure et au moins un composé dihalogéné aromatique dans au moins un solvant, dans lequel

   a) on prépare, dans un premier récipient de réaction (2) une solution d'un sulfure et d'un solvant aprotique dipolaire,
   b) on fait réagir dans un deuxième récipient de réaction (3) le sulfure et un composé dihalogéné aromatique en formant un polymère contenant du soufre,
   c) on détend complètement ou partiellement la pression dans le deuxième récipient de réaction (3) pendant la réaction et on met en contact le mélange de vapeurs qui s'échappe avec la solution préparée dans l'étape (a).

2. Procédé selon la revendication 1, dans lequel le composé dihalogéné aromatique est utilisé en un excès stoechiométrique de 3% en mole à 100% en mole, de préférence de 5% en mole à 75% en mole et de manière particulièrement préférée de 10% en mole à 50% en mole de l'hydrocarbure aromatique dihalogéné par rapport à la quantité stoechiométrique du sulfure.

3. Procédé selon la revendication 1 ou 2, dans lequel les hydrocarbures aromatiques dihalogénés qui s'échappent pendant la réaction sont à nouveau recyclés dans la polymérisation.

4. Procédé selon l'une ou plusieurs des revendications 1 à 3, dans lequel la solution du sulfure et du solvant aprotique dipolaire est préparée à une température de 85°C à 200°C, de préférence de 130°C à 210°C.

5. Procédé selon l'une ou plusieurs des revendications 1 à 4, dans lequel, dans la solution du sulfure et du solvant aprotique bipolaire, le rapport molaire de sulfure à solvant se situe dans la plage de sulfure/NMP = 4 à sulfure/NMP = 0,2, de préférence de sulfure/NMP = 2 à sulfure/NMP = 0,5.

6. Procédé selon l'une ou plusieurs des revendications 1 à 5, dans lequel la solution préparée dans l'étape (a) est mise en contact dans l'étape (c), dans un laveur sous l'effet de la gravité, avec le mélange de vapeurs ascendant avant son entrée dans le deuxième récipient de réaction (3).

7. Procédé selon la revendication 6, dans lequel on utilise comme laveur une colonne.

8. Procédé selon la revendication 6 ou 7, dans lequel on utilise comme laveur la partie inférieure d'une colonne et on sépare le solvant de l'eau dans la partie supérieure de la colonne.

9. Procédé selon l'une ou plusieurs des revendications 1 à 8, dans lequel le rapport molaire de solvant à sulfure utilisé dans l'étape (b) est de 4 à 1, de préférence de 3,5 à 1, ou le rapport massique de solvant à sulfure utilisé dans l'étape (b) est de 4 à 1, de préférence de 3,5 à 1.

10. Procédé pour la préparation d'un polymère contenant du soufre à partir d'au moins un prépolymère halogéné et un sulfure qui est préparé selon l'une ou plusieurs des revendications 1 à 9 dans une première étape, dans laquelle on utilise un excès stoechiométrique de 3% en mole à 100% en mole d'un composé halogéné aromatique par rapport au sulfure et

d) on ajoute au solvant et au prépolymère, dans une deuxième étape, moins de 10% en mole de sulfure par rapport à la quantité de sulfure utilisée dans les étapes (a) à (c),
e) on polymérise dans la deuxième étape le prépolymère et le sulfure en polymère contenant du soufre, et
f) on isole le polymère contenant du soufre.

11. Procédé selon la revendication 10, dans lequel la réaction du prépolymère et du sulfure en polymère contenant du soufre dans l'étape (e) se déroule dans une solution quasiment homogène, qui contient au maximum 5% en poids de sel, de préférence moins de 2% en poids de solides non dissous, par rapport à la masse totale du mélange réactionnel dans l'étape (e).

Fig. 1.

Fig. 2.